# EUROPEAN PATENT APPLICATION

(11) **EP 1 672 571 A1**
(43) Date of publication of application: **21.06.2006**
(21) Application number: 04106591.3
(22) Date of filing: 15.12.2004
(51) Int. Cl.: G06Q 10/00

(54) **Method and computer system for e-mail processing**

(71) Applicant: SAP AG, 69190 Walldorf (DE)
(72) Inventor: Ziegert, Thomas, 64295 Darmstadt (DE)

(57) **Abstract**

An e-mail system (900) includes a storage means (930) that stores at least one list (210, 220) of e-mail recipients. An e-mail client (910) of the e-mail system is configured to present a user interface that is configured to assign the at least one list (210, 220) to an e-mail message (200) and is further configured to receive at least one single e-mail recipient (251, 252) to be excluded from the at least one list (210, 220). An e-mail server (920) of the system is configured to send the e-mail message (200) to the recipients of the at least one list (210, 220) with the exception of the at least one single e-mail recipient (251, 252). The e-mail client (910) uses a transfer protocol to communicate with the e-mail server (920) and the transfer protocol enables the e-mail client (910) to transfer information about the e-mail recipients of the e-mail message (200) to the e-mail server (920).

## Description

### Field of the Invention

The present invention generally relates to electronic data processing, and more particularly, relates to methods, computer program products and systems for e-mail processing.

### Background of the Invention

In commercially available e-mail systems, such as, for example, Microsoft Outlook, it is possible to define and store lists with e-mail recipients. Such a list can be assigned to an e-mail. The e-mail can then be sent to all recipients included in the list. Sometimes an e-mail may target a certain group of recipients, where the recipients are already included in a list. However, there may some additional recipients included in the list. For example, one may edit the list and remove the additional recipients from the list and then save the modified list. In this case the original list is lost. One may also save the new list under a new name. In this case additional storage space is consumed by the new list.

MAPILab Ltd. offers an extension program called "Send Personally", which allows one to choose addresses to be excluded from a first list when creating an e-mail message. To do that, a second list which name starts with the word "exclude" is created. The second list includes the recipients to be excluded from the first list. Then the names of the first and second lists are entered into the "To" field of the e-mail message being created. This solution requires the creation and storage of additional exclusion lists which results in additional storage space consumption. Further, for any subgroup of recipients included in the first list a corresponding exclusion list is needed, which results in large numbers of exclusion lists making the system difficult to handle for a user because the user needs to remember the content of the various exclusion lists. This may easily lead to a situation where the e-mail message is finally not delivered to the intended group of recipients.

### Summary of the Invention

In one aspect of the invention the problem of additional storage space consumption and low flexibility of exclusion lists is solved by the features of the independent claims.

An e-mail system includes a storage means storing at least one list of e-mail recipients. It further includes an e-mail client configured to present a user interface that is configured to assign the at least one list to an e-mail message. The user interface is further configured to receive at least one single e-mail recipient to be excluded from the at least one list (210, 220). The system further includes an e-mail server that is configured to send the e-mail message to the recipients of the at least one list with the exception of the at least one single e-mail recipient. The e-mail client uses a transfer protocol to communicate with the e-mail server. The transfer protocol enables the e-mail client to transfer information about the e-mail recipients of the e-mail message to the e-mail server.

The system can be used to perform a method for determining e-mail recipients of an e-mail message including the steps of:
Receiving at least one list of e-mail recipients at the e-mail client. The at least one list is assigned to the e-mail message.
Receiving at the e-mail client at least one single e-mail recipient to be excluded from the at least one list.
Transferring from the e-mail client to the e-mail server information about the e-mail recipients of the e-mail message by using a transfer protocol that allows to indicate that the e-mail recipients of the e-mail message include the recipients of the at least one list with the exception of the at least one single e-mail recipient.
The e-mail system and method as well as a corresponding computer program product for performing the method do not require to store additional lists for exclusion of specific recipients from a distribution list. Moreover, single users can be excluded from the distribution list on the fly by simply entering the names of the recipients into a corresponding area of the e-mail user interface when creating an e-mail message.
The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

FIG. 1 is a simplified block diagram of a computer system for e-mail processing according to one embodiment of the invention;
FIG. 2 is an example of a simplified user interface according to one embodiment of the invention;
FIG. 3 shows further details of the user interface; and
FIG. 4 is a simplified flow chart of a method for determining e-mail recipients of an e-mail message according to one embodiment of the invention.

### Detailed Description of the Invention

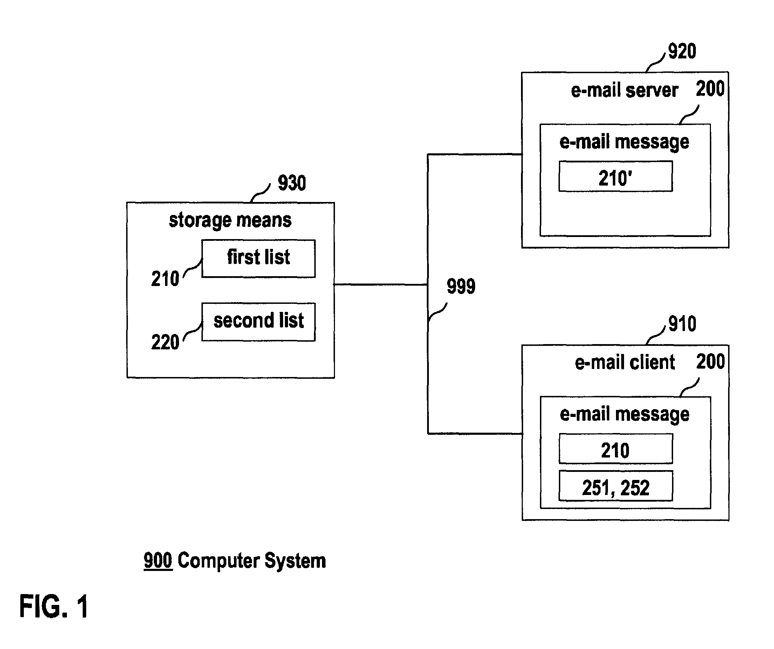

FIG. 1 is a simplified block diagram of a computer system 900 for e-mail processing according to one embodiment of the invention. The computer system includes for a storage means 930 for storing at least one list of e-mail recipients. In the example, a first list 210 and a second list 220 are stored. The storage means can be implemented by any commercially available memory component.

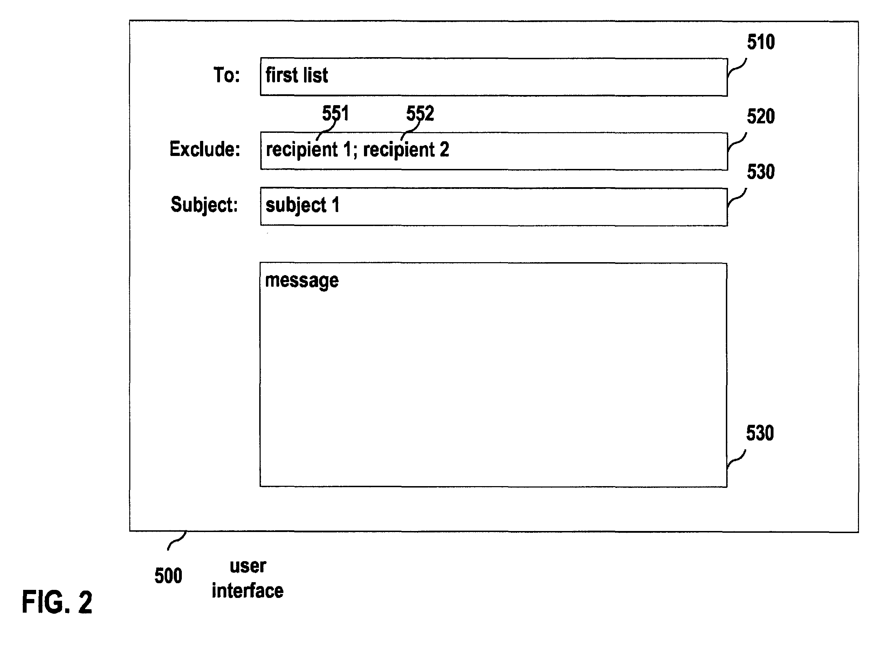

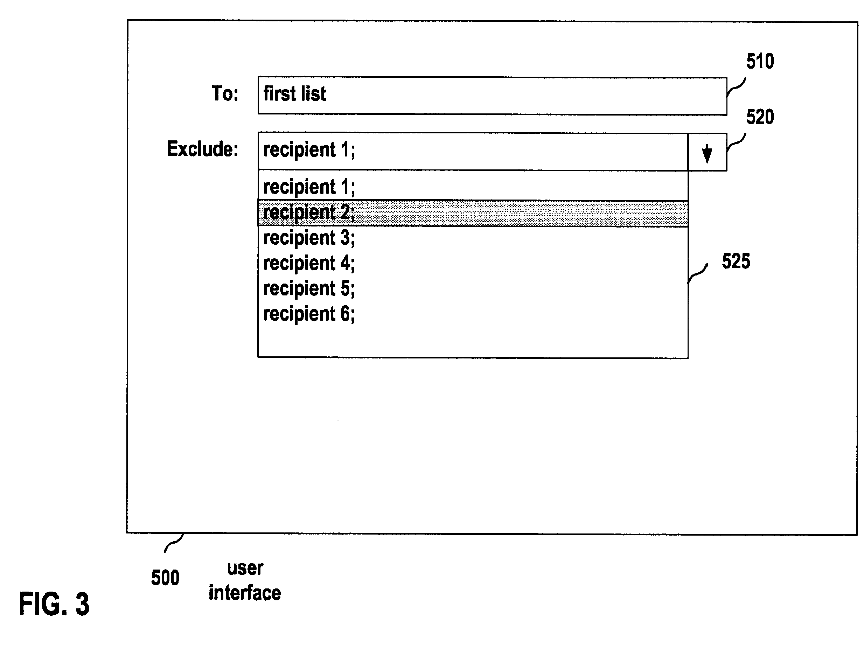

The computer system 900 further includes an e-mail client 910 that is configured to present a user interface to a user who intends to write an e-mail message 200. The user interface is configured to assign the at least one list (e.g., first list 210) to the e-mail message 200. It is possible to assign further lists (e.g., second list 220) to the e-mail message. The user interface is further configured to receive at least one single e-mail recipient (e.g., first recipient 251, 252) to be excluded from the at least one list. An example of such a user interface is further described in FIGs. 2 and 3. Receiving a single e-mail recipient means that the user may enter a single recipient to be excluded from the list on the fly in a corresponding data entry area of the user interface. There is no need to define and store an extra list that includes the single recipient to be excluded. This allows the e-mail user to exclude on the fly any combination of single recipients from the list, thus resulting in a reduced list of recipients.

The system 900 further includes an e-mail server 920 that is configured to send the e-mail message 200 to the reduced list 210' of recipients. The reduced list 210' includes the recipients of the at least one list (e.g., lists 210, 220) with the exception of the at least one single e-mail recipient (e.g., recipients 251, 252). The e-mail client 910 uses a transfer protocol to communicate with the e-mail server 920 wherein the transfer protocol enables the e-mail client 910 to transfer information about the e-mail recipients of the e-mail message 200 to the e-mail server 920. For example the transfer protocol can be a common mail transfer protocol, such as SMTP.

The e-mail client 910, the e-mail server 920 and the storage means 930 can communicate over a network 999. It is not important, where the storage means 930 is physically located. For example, it may also be implemented in the e-mail client 910 or e-mail server 920. In another embodiment of the invention the e-mail server 920 and the e-mail client 910 may be implemented on one physical computer.

In a first implementation the e-mail client 910 expands the at least one list 210 and locally removes the single recipients 251, 252 from the at least one list resulting in the reduced list 210'. In this implementation the reduced list 210' is communicated to the e-mail server 920.

In a second implementation the e-mail client sends the at least one list 210 and the information about the single recipients 251, 252 to be excluded from the at least one list to the e-mail server 920. The e-mail server performs the expansion of the at least one list and removes the single recipients accordingly resulting in the reduced list 201'.

FIG. 2 is an example of a simplified user interface 500 (UI), which can be displayed to an e-mail user using the e-mail client 910 according to one embodiment of the invention. A conventional display device, such as a computer monitor, may be used for visualisation of the user interface 500. The UI 500 can be used to create an e-mail message (e.g., e-mail message 200). The UI 500 includes multiple components to assign specific attributes or values to the e-mail message that is currently being edited through the UI 500.

The UI 500 can include a To-component 510, where the user can enter single recipients or lists of recipients. In the example, the user has entered a list name "first list", which can correspond to the first list 210. All entries in the To-component 510 get assigned to the e-mail message.

A further component of the UI 500 is the Exclude-component 520. This component can receive single recipients which are supposed to be excluded from the recipients of the "first list".

Further components, such as a subject-component 530 to receive a title (e.g., "subject1") or the message-component 530 to receive the message body are standard components of e-mail UIs.

FIG. 3 shows one implementation of the Exclude-component 530 that allows the user to select the single recipients that are subject for exclusion from the "first list".

In this implementation the Exclude-component 520 is implemented as a drop-down list box 525. For example, when the user clicks on the little arrow of the Exclude-component 520, the drop-down list box shows all the recipients that are assigned to the currently edited e-mail message in the To-component. In the example, all recipients of the "first list" are shown (e.g., "recipient 1" to "recipient 6"). The user has already decided to exclude "recipient 1" from the list as the corresponding single recipient entry is already entered into the Exclude-component 520. The user can now select further single recipients from the drop-down list box 525. In the example, the user selects "recipient 2" (shown with grey shadowed background), which is then added to the entries in the Exclude-component 520.

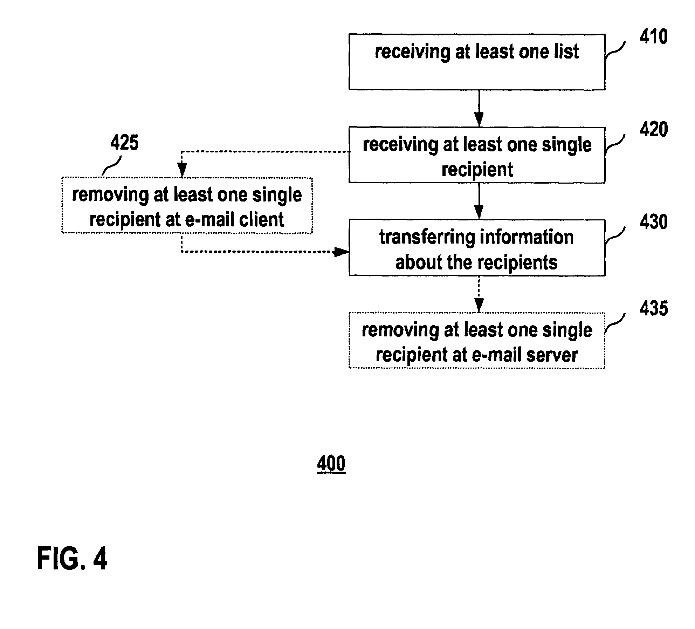

FIG. 4 is a simplified flow chart of a method 400 for determining e-mail recipients of an e-mail message 200 according to one embodiment of the invention.

The method includes the following steps.

Receiving 410 at least one list 210, 220 of e-mail recipients at an e-mail client 910. The at least one list 210, 220 is assigned to the e-mail message 200. This can be achieved by using a user interface, such as, for example, the one described in FIG. 2.

Receiving 420 at the e-mail client 910 at least one single e-mail recipient 251, 252 to be excluded from the at least one list 210, 220. This can be achieved by, for example, using the user interface as described in FIGs. 2 and 3.

Transferring 430 information about the e-mail recipients of the e-mail message 200 from the e-mail client 910 to the e-mail server 920. The following examples show SMTP examples of a transfer protocol that allows the e-mail client to indicate to the e-mail server that the e-mail recipients of the e-mail message 200 include the recipients of the at least one list 210, 220 with the exception of the at least one single e-mail recipient 251, 252. The following examples illustrate two implementations of the transferring step 430.

Optional steps removing 425 and removing 435 of the method 400 are illustrated by dashed lines and boxes.

Tables 1 and 2 show a first SMTP example that refers to the first implementation as described in FIG. 1. In the example, the first list is provided by the e-mail server. However, the first list may also be stored on the e-mail client or somewhere else in the computer system 900.

**Table 1: example of STMP protocol for list expansion**

| line number | protocol lines |
|---|---|
| 1 | S: 220 server.com Simple Mail Transfer Service Ready |
| 2 | C: EHLO client.com |
| 3 | S: 250-server.com greets client.com |
| 4 | C: EXPN first list |
| 5 | S: 250-recipient1 <rec1@example.edu> |
| 6 | S: 250-recipient2 <rec2@physics.a-university.edu> |
| 7 | S: 250-... |
| 8 | ... |
| 9 | S: 250-recipient6 <rec6@a_company.com> |
| 10 | S: 250 OK |
| 11 | C: QUIT |
| 12 | S: 221 server.com Service closing transmission channel |

Lines 1 to 3 of table 1 establish a communication session between the e-mail client and the e-mail server.

In line 4, the e-mail client asks the e-mail server to expand the first list.

In lines 5 to 9, the e-mail server sends all recipients included in the first list to the e-mail client. This is acknowledged by the server (line 10).

Lines 11 to 12 terminate the communication session.

Then the e-mail client removes 425 the single recipients recipient 1 and recipient 2 from the list of recipients, which is illustrated by the example in table 2. Again, a communication session with the e-mail server is established (lines 1 to 3 of table 2).

In line 4, the client initiates the e-mail transfer to the server. The client sends the name of the sender to the e-mail server, which is acknowledged by the e-mail server in line 5. The e-mail client then calculates the reduced list of recipients by removing the single recipients 1 and 2 form the recipients of the first list. Then the client sends back the reduced list including the recipients 3 to 6 (cf. lines 6 to 8), which is acknowledged by the server in line 9.

In line 10 the e-mail client indicates that it wants to begin with sending the message body. The sending (line 11) is terminated in line 12 and acknowledged by the server (line 13).

Lines 14 to 15 terminate the communication session.

**Table 2: example of STMP protocol for removing single recipients at the e-mail client**

| line number | protocol lines |
|---|---|
| 1 | S: 220 server.com Simple Mail Transfer Service Ready |
| 2 | C: EHLO client.com |
| 3 | S: 250-server.com greets client.com |
| 4 | C: MAIL FROM:<sender1@example.com> |
| 5 | S: 250 OK |
| 6 | C: RCPT TO:<rec3@b_company.com> |
| 7 | ... |
| 8 | C: RCPT TO:<rec6@a_company.com> |
| 9 | S: 250 OK |
| 10 | C: DATA |
| 11 | ... |
| 12 | C: . |
| 13 | S: 250 OK |
| 14 | C: QUIT |
| 15 | S: 221 server.com Service closing transmission channel |

Table 3 shows a further SMTP example that refers to the second implementation as described in FIG. 1. Table 3 replaces table 2 in the second implementation in the scenario where the e-mail server removes 435 the single recipients.

**Table 3: example of STMP protocol for removing single recipients at the e-mail client**

| line number | protocol lines |
|---|---|
| 1 | ... |
| 2 | C: MAIL FROM:<sender1@example.com> |
| 3 | S: 250 OK |
| 4 | C: RCPT TO:<first list> |
| 5 | S: 250 OK |
| 6 | C: EXCLUDE:<rec1@example.edu> |
| 7 | S: 250 OK |
| 8 | C: EXCLUDE:<rec2@physics.a-university.edu> |
| 9 | S: 250 OK |
| 10 | ... |

Lines 1 to 3 of table 3 correspond to lines 1 to 5 of table 2. In line 4 of table 3 the client sends the first recipient's name, which, in the example, is the name of the first list. In lines 6 and 8, the client asks the server to remove the single recipients (recipients 1 and 2) from the first list. Therefore, it sends an EXCLUDE command, which advises the e-mail server to remove 435 the recipient which follows the command. For example, the EXCLUDE command may be implemented as an extension to the SMTP protocol. The remaining steps correspond to those of table 2 starting in line 10. Embodiments of the invention can be implemented in digital electronic circuitry, or in computer hardware, firmware, software, or in combinations of them. The invention can be implemented as an e-mail computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the e-mail program described above, can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. An e-mail system (900) comprising:
a storage means (930) storing at least one list (210, 220) of e-mail recipients;
an e-mail client (910) configured to present a user interface (500) that is configured to assign the at least one list (210, 220) to an e-mail message (200) and is further configured to receive at least one single e-mail recipient (251, 252) to be excluded from the at least one list (210, 220); and
an e-mail server (920) configured to send the e-mail message (200) to the recipients of the at least one list (210, 220) with the exception of the at least one single e-mail recipient (251, 252), wherein the e-mail client (910) uses a transfer protocol to communicate with the e-mail server (920) and wherein the transfer protocol enables the e-mail client (910) to transfer information about the e-mail recipients of the e-mail message (200) to the e-mail server (920).

2. The e-mail system (900) of claim 1, wherein the e-mail client (910) is configured to generate a reduced list (210') of recipients my removing the at least one single e-mail recipient (251, 252) from the at least one list (210, 220).

3. The e-mail system (900) of claim 1, wherein the e-mail server (920) is configured to generate a reduced list (210') of recipients my removing the at least one single e-mail recipient (251, 252) from the at least one list (210, 220).

4. A method (400) for determining e-mail recipients of an e-mail message (200) comprising the steps of:
receiving (410) at least one list (210, 220) of e-mail recipients at an e-mail client (910), the at least one list (210, 220) being assigned to the e-mail message (200);
receiving (420) at the e-mail client (910) at least one single e-mail recipient (251, 252) to be excluded from the at least one list (210, 220);
transferring (430) from the e-mail client (910) to an e-mail server (920) information about the e-mail recipients of the e-mail message (200) by using a transfer protocol that allows to indicate that the e-mail recipients of the e-mail message (200) include the recipients of the at least one list (210, 220) with the exception of the at least one single e-mail recipient (251, 252).

5. The method (400) of claim 4, wherein in the transferring step (430) the e-mail client (910) transfers the at least one list (210, 220) and the at least one single e-mail recipient (251, 252) to the e-mail server (920), the at least one single e-mail recipient (251, 252) being marked for exclusion in the transfer protocol; comprising the further step:
removing (435) the at least one single e-mail recipient (251, 252) from the at least one list (210, 220) at the e-mail server (920).

6. The method (400) of claim 4, comprising the further step:
removing (425) the at least one single e-mail recipient (251, 252) from the at least one list (210, 220) at the e-mail client (910) resulting in a reduced list (210') of recipients, wherein in the transferring step (430) the e-mail client (910) transfers the reduced list (210') to the e-mail server (920), the at least one single e-mail recipient (251, 252) being marked for exclusion in the transfer protocol;

7. A computer program product having a plurality of instructions that when loaded into a memory of a computer system (900) cause at least one processor of the computer system (900) to execute the steps of any one of the claims 4 to 6.

## Amended claims

### Amended claims in accordance with Rule 86(2) EPC.

**1.** An e-mail system (900) comprising:
a storage means (930) storing at least one list (210, 220) of e-mail recipients;
an e-mail client (910) configured to present a user interface (500) that is configured to assign the at least one list (210, 220) to an e-mail message (200), is further configured to receive at least one single e-mail recipient (251, 252) to be excluded from the at least one list (210, 220), and is configured to generate a reduced list (210') of recipients my removing the at least one single e-mail recipient (251, 252) from the at least one list (210, 220); and
an e-mail server (920) configured to send the e-mail message (200) to the recipients of the at least one list (210, 220) with the exception of the at least one single e-mail recipient (251, 252), wherein the e-mail client (910) uses a transfer protocol to communicate with the e-mail server (920) and wherein the transfer protocol enables the e-mail client (910) to transfer information about the e-mail recipients of the e-mail message (200) to the e-mail server (920).

**2.** The e-mail system (900) of claim 1, wherein the e-mail client is further configured to provide a drop-down list box showing all recipients of the at least one list (210, 220) so that the at least one single e-mail recipient (251, 252) is selectable.

**3.** A method (400) for determining e-mail recipients of an e-mail message (200) comprising the steps of:
receiving (410) at least one list (210, 220) of e-mail recipients at an e-mail client (910), the at least one list (210, 220) being assigned to the e-mail message (200);
receiving (420) at the e-mail client (910) at least one single e-mail recipient (251, 252) to be excluded from the at least one list (210, 220);
removing (425) the at least one single e-mail recipient (251, 252) from the at least one list (210, 220) at the e-mail client (910) resulting in a reduced list (210') of recipients;
transferring (430) from the e-mail client (910) to an e-mail server (920) the reduced list (210'), the at least one single e-mail recipient (251, 252) being marked for exclusion in a transfer protocol.

**4.** The method (400) of claim 3, comprising the further step:
providing a drop-down list box showing all recipients of the at least one list (210, 220) so that the at least one single e-mail recipient (251, 252) is selectable.

**5.** A computer program product having a plurality of instructions that when loaded into a memory of a computer system (900) cause at least one processor of the computer system (900) to execute the steps of any one of the claims 3 to 4.
